# EUROPEAN PATENT APPLICATION

(11) **EP 1 622 056 A2**
(43) Date of publication of application: **01.02.2006**
(21) Application number: 05270030.9
(22) Date of filing: 19.07.2005
(51) Int. Cl.: G06F 17/30

(54) **Proxy and cache architecture for documents storage**

(30) Priority: 20.07.2004 US 894025
(71) Applicant: AT&T Corp., New York, NY 10013-2412 (US)
(72) Inventor: PRASAD, Vishwa, 07747, Matawan (US); GAULD, Andrew, 07748, Middletown (US); GLASSER, Alan, 07726, Manalapan (US)
(74) Representative: Suckling, Andrew Michael

(57) **Abstract**

A system for accessing documents from a main storage utilizing proxies and caches. Each of the documents is also assigned to one and only one of the caches. Users access the system through proxies, which are able to determine which cache stores the document. Proxies retrieve the documents through the caches. If the cache does not contain the document, only then is the document retrieved through the main server.

## Description

### Background of the Invention

### Field of the Invention

The present invention relates generally to an architecture for retrieving documents in storage and more particularly to an architecture using one or more proxies and caches for accessing documents in storage.

### Description of the Background

In many situations a large number of documents need to be stored electronically in a central storage that must be accessible by a large number of users. The stored documents may be of varying sizes and may include multimedia documents rather than strictly text. As the number of users and number of documents increases, it becomes increasingly difficult not only to provide a large enough storage system, but also to provide quick access to the documents. Typically, when many users try to access the system, the speed of accessing documents decreases. Some examples of situations where a large number of documents are being stored include Netnews, digital libraries, audio/video libraries, news casts, multimedia sources and other situations.

Many approaches have been attempted in order to solve the problems of providing quick access of documents to a large number of users. One approach has been to provide cache storage, where caches are provided that store frequently accessed documents accessed by the users.

Caches generally operate in the following manner. When a request for a document is received by a cache, there are generally 2 possible outcomes:

1) The cache has the document and returns it to the requester (without the costs associated with retrieving the document from an upstream system) (a "hit"), or

2) The cache does not have the document and must retrieve it from the upstream system (with the cost of both the upstream retrieval and the overhead of discovering that the document was not in the cache (a "miss").

The percentage of all accesses that are hits is known as the "hit rate". The utility of a cache is limited by its capacity (the total size or total number of documents it can store), its latency (how long it takes to retrieve a document), its throughput (the total size or total number of documents it can retrieve per unit time), and its cost.

As the capacity of a cache is raised, its hit rate will increase since the likelihood that a document previously fetched from the upstream system will still be in the cache when a subsequent request for the document is received. There is a limit of diminishing returns on this since storage is not free and some documents are only rarely requested. Caches usually do not have sufficient capacity to store the complete set of all documents.

If a cache cannot meet the throughput requirements of an application, either multiple caches or a higher performance cache must be used. While splitting the load among multiple caches using current load distribution mechanisms increases the throughput, it does not improve the latency of the combined system or the effective capacity. In fact, the effective capacity and thus the hit rate may be lower than any of the individual caches since frequently requested documents will be fetched by each of the caches from the primary server rather than only once.

However, this arrangement does not solve many problems. When the load is split across multiple independent caches, frequently accessed documents are retrieved by multiple, and potentially all of the, caches. Thus, increasing the number of caches increases the load on the primary server, sometimes even reducing the overall capacity of the system. The cost of the storage for entire system also increases because the same document is stored in multiple caches.

What is needed is a means for making the many caches behave as if they were a single cache with not only the combined throughput of the individual caches, but the combined storage capacity of the individual caches. Also, a means is needed for minimizing the effect of a failure of one or more of the caches. Also, a means is needed for gradually growing, within limits, the overall capacity of the system.

Caches are commonly used and are often deployed at various locations for purposes of reducing bandwidth required to download web pages including within web browsers, within corporate firewalls, and both distributed and centralized in internet service provider networks.

Proxies are commonly used and are typically deployed within corporate firewalls to implement corporate security policies such as preventing those outside the corporation from accessing internal documents and monitoring internet use by those inside the corporation. These proxies can typically be programmed with a set of rules for categorizing requests as (for example) requests for internal documents, requests for external documents, and requests for forbidden documents and rules for how and whether to satisfy these categories of requests.

A proxy and a cache are often combined into a single cache/proxy system where both functions are needed (such as at corporate firewalls). Where a single cache, proxy, or cache/proxy has insufficient capacity, multiple such systems are frequently deployed with the load being distributed geographically, by a Domain Name Service round-robin mechanism, or by separate load balancers. Combinations of these methods are also used.

Proxies are frequently used by service providers to route user's requests for service to the machine within the service provider's network that stores that user's mail. This typically involves a proxy searching a directory to determine which machine stores the email messages belonging to a specific user with the directory taking the form of a look-up table. Caches are not usually used for email.

Caches are also available for Netnews service. At least one service provider has deployed caches behind load balancers to reduce the load on the primary server.

NNTP (Network News Transfer Protocol) is an internet based protocol for retrieving documents from a Netnews service. Every NetNews document (or article) has a message ID (a unique identifier), a body varying in size from nothing to a few megabytes, a set of news groups it belongs to, various other attributes, and for each news group it belongs to, an article number assigned by the service provider's primary server indicating the order of arrival of the article. The NNTP protocol provides various mechanisms including the "STAT" command for determining the message ID of an article given an article number/news group pair. Message IDs are never re-used. A re-issued version of a document would have a different message ID. Millions of articles are posted to Netnews every day with the rate of posting increasing significantly from year to year.

A single large NNTP cache can meet the latency requirements of a large service provider, but can meet only a fraction of the throughput requirements and thus many caches must be deployed. The hit rate achieved by such a configuration is typically in the range of 75%, presenting 25% of the full load to the primary server, and in fact, requiring the deployment of multiple "primary" servers.

### Summary of the Invention

Accordingly, the present invention provides a novel architecture for retrieval of documents from a central storage unit.

Furthermore, the present invention provides a proxy and cache architectural arrangement for retrieving documents from a-central storage unit through a primary server.

The present invention further provides an architecture for a plurality of users to access documents arranged in a central storage unit using proxies.

Still further, the present invention provides a system and method for storing documents for future access by a large number of users using a cache architecture where the documents are separately stored in one of the caches.

The present invention still further provides a system and method for storing a large number of documents in a storage unit connected through a primary server where a large number of users are connected through proxies to access caches each of which has stored therein a portion of the documents of the primary server.

Briefly, the present invention achieves this by providing at least one proxy to which the users are connected, where each proxy includes a procedure for knowing which documents are located in each of a plurality of caches so that the proxies can access the proper cache for a document. The individual caches are each responsible for caching a different subset of the documents and only access the primary server when the document is missing or when the cache is first asked for a document.

### Brief Description of the Drawings

A complete appreciation of the invention and many of the attendant advantages will be readily appreciated as the same becomes better understood by reference to the following detailed description when considered with the accompanying drawings, wherein:

Figure 1 is a block diagram of a first embodiment of the present invention;

Figure 2 is a block diagram of a second embodiment of the present invention; and

Figure 3 is a flowchart of the process followed by a proxy to determine the appropriate cache access.

### Description of the Preferred Embodiment

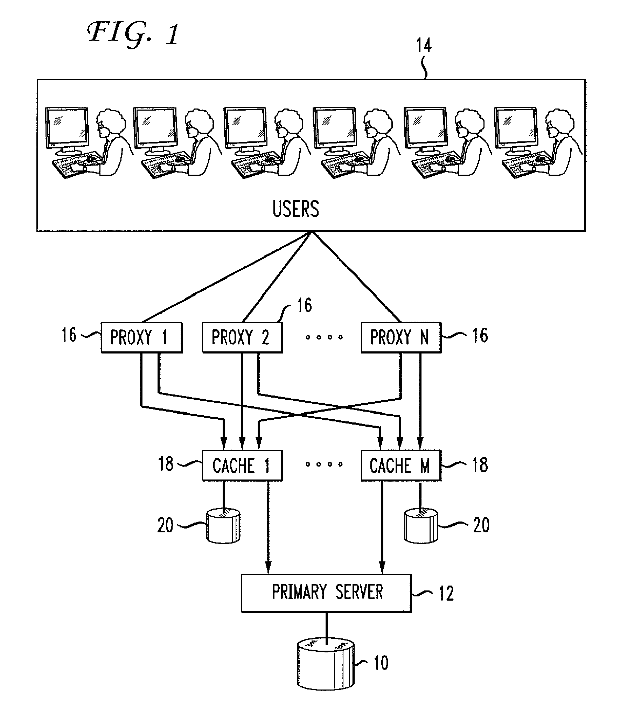

Referring now to the drawings, wherein like numerals designate identical or corresponding parts throughout the several used, and more particularly to Figure 1, wherein the overall arrangement of the first embodiment of the present invention is shown as including a central storage unit 10. The storage unit 10 is connected to a primary server 12 which controls access to the storage unit. The storage unit has a very large capacity for a great many documents including those having a large size. In order to maintain the speed of the main storage unit, it is important that it not be accessed unnecessarily. Thus, if many users try to access the storage unit through the primary server 12, the speed of service will quickly drop.

Accordingly, the present invention utilizes an arrangement of proxies 16 and caches 18 to reduce the load on the primary server 12 and storage unit 10. Each of the users 14 is connected to the system through the Internet in a well-known manner. It would also be possible that some or all of the users could be at locally arranged terminals directly connected to this system. This might be the situation for example in a large library where users are located on site and are connected through a local network.

The system includes at least one proxy 16 which are numbered as 1-N in Figure 1. When the users are connected to the system, they are individually connected to a proxy, which receives their request and acts on their behalf to access the documents requested by the users. The proxies may be separate computers or may be set up by a software arrangement within a server. Users are assigned to the proxies in a well-known manner such as by a load balancer so that all the proxies are used equally. The user is typically assigned to a proxy before requesting a document and remains assigned to that proxy for the duration of a session possibly involving multiple document requests.

The system also includes a plurality of caches 18, numbered as 1-M. The number of proxies and the number of caches can be the same or may be different. Each cache is assigned to store an approximately equal portion of the documents stored in the main storage unit 10. Each of the documents is assigned to one and only one cache. Each cache has associated therewith a cache memory 20, which stores the documents assigned to the cache. The cache controller accesses the documents in the storage 20 when requested by a proxy. Cache units are well known in the art and are available commercially. Any of such commercially available products could be utilized in this system.

The number of caches utilized depends on the number of requests per second. As the number of documents requested increases, it is possible to add caches to the system so that the entire system becomes scalable. Thus, it is possible to first install the system with a small number of caches and increase the number of caches as required by a customer.

The assigned proxy then determines which cache is assigned to the requested document and the proxy requests the document from that cache. The cache retrieves the document from its storage 20 and sends it to the user through the proxy. Each of the proxies has included therein a process for determining which cache contains the requested document. A preferred method would be the use of an algorithm for determining which cache is assigned.

One algorithm which could be used determines a modulus of the total number of caches of a hash function of the unique identifier of the document. This basically means that if a number generated by a function of the identifier is divided by the number of functioning caches, that the remainder will indicate the cache to which it is assigned. The documents are assigned to caches according to an algorithm so that, it is not necessary to tell either the caches or the proxies where the documents are located since all of the caches and proxies are operating according to the same algorithm. Further, the only information that needs to be shared is the list of configured caches.

When a user, through a proxy, requests a document from a cache, it determines if the document is stored in its storage unit 20. Often the documents will be present. However, when the system is first started, when the caches are reconfigured due to the failure to one of the caches or the addition of a new cache, when a document is new or when a document has been discarded to make room for another document the associated storage unit may not have the document. If this happens, the cache accesses the main storage unit 10 through the primary server 12 to retrieve the document, and places it in its own storage unit. The document can then be sent to the proxy and user in the same manner.

Thus, a set of caches, with load distributed roughly evenly between them is improved by inserting a set of "proxies" between the load balancing mechanism and the caches such that load is distributed by the load balancing mechanism roughly evenly between the proxies. The proxies then select caches to handle individual requests based on the unique identifier of the requested document using a classic hash algorithm where the hash buckets correspond to the caches and each "bucket" can store a large number of documents. Since each cache will now see all requests for a fraction of the documents rather than a fraction of the requests for all documents, the set of caches will behave as if it had the combined capacity of the individual caches rather than as if it had the capacity of only one of the individual caches.

If a cache fails, its documents are reassigned among the remaining caches. Thus, this would leave the system in Figure 1 with M-1 caches rather than M caches. When a cache leaves service, all proxies are notified or as an alternative, proxies can discover using well known methods that a cache is out of service the next time the proxy attempts to access the out of service cache. These same two methods may be used by a proxy to determine that a cache has been restored to service. This reassignment is handled with a modification of a classic re-hash. In the event that the initial hash of a unique identifier would route a request to out of service cache, the unique identifier is hashed a second time against not the complete list of all configured caches (M), but against the list of all functioning caches (M-1). This causes all requests initially assigned to functioning caches to continue to be assigned to them following a breakdown, with only the requests assigned to out of service caches being re-distributed. If the initial hash were among only functioning caches, then a failure of a single cache would cause nearly all documents to be reassigned and thus nearly the full load to temporarily fall on the primary server.

The same procedure is followed when a cache is added or when a failed cache is repaired and returned to service. Although not shown, the proxies may be connected to a central server to inform them of the list of caches configured on this system.

It is possible to gradually grow the system within limits. The overall capacity of the system is addressed by initially configuring the system with more caches than are actually installed. These extra caches are then treated as "out of service" until such time as they are actually installed with the load they will eventually serve being shared among those caches that are initially installed.

As indicated above, the number of caches is variable, depending on the total throughput or requests per second. An example of a typical system might include 100 such caches. Likewise, the number of proxies is variable and also depends on the total throughput. The capacity of an individual proxy will typically be limited by the available capacity of its interface to the load balancing mechanism, by the available capacity of its interface to the caches, or by its processing capacity. If too few proxies are provided, users will not be able to access the system no matter how fast the system can run. As indicated above, the proxies can be individual units or dedicated portions of a server. It would also be possible to provide units which each contain one proxy and one cache. In this situation, the number of proxies and caches would be same. However, the proxies would still interact with all of the caches.

It is possible that the protocol between the cache and primary server is the same as the protocol between the user and the proxy. Likewise the protocol between the proxy and the cache can be the same.

This system has a number of benefits not seen in the prior art. When the system is in the steady state, each document will be stored in one cache with no duplication between caches. Should one of the caches fail, the load is automatically distributed without interruption. Commercially available low capacity, low throughput servers can be utilized for proxies and caches instead of expensive high capacity caches without reducing service. This system is scalable so that hardware can be added as necessary. Thus, a lower capacity, less expensive primary server can be used.

A request for a document may identify a document using some identifier other than the document's unique identifier. For example, in the case of Net News, it may specify the news group name and an article number rather than a message ID. In this case, the proxy may perform a separate request to the primary server to determine the message ID (in the case of Net News, this would be a STAT request), and once it has the message ID, it can proceed to determine which cache to route the request to. As an alternative to querying the primary server, the proxies may use one or more caches or lookup tables which store mappings from other identifiers to the corresponding documents' unique IDs.

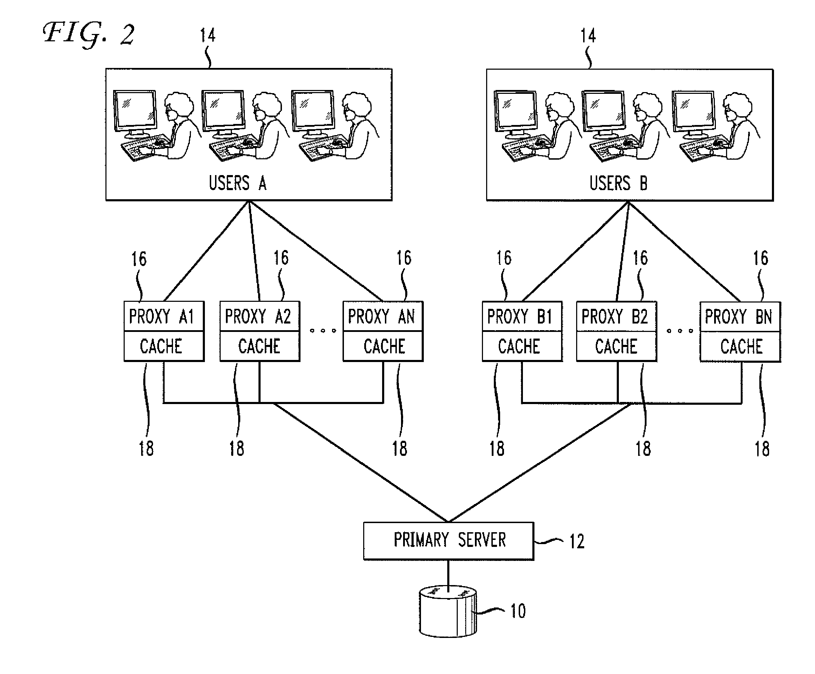

It is possible that in some situations, users will be distributed at a small number of the sites. If the proxies and caches are distributed among these sites there will be a lot of traffic between sites as proxies at one site access documents stored in caches at another site. This is an undesirable situation since the amount of message traffic becomes large. In order to avoid this situation, a second embodiment of the invention has been developed as shown in Figure 2.

In this system, the main storage unit and primary server are used in similar fashion. However, for the users at location A, a full set of proxies and caches are provided so that all of the documents will be stored in the caches located at site A. Likewise, for the group of users at site B, a full set of caches having all of the documents, are provided at that site as well. Using this arrangement, no message traffic needs to be instituted between the sites A and B. This type of arrangement will double the amount of access to the main storage unit 10 through the primary server 12. If more than two locations are used, access to the primary server will increase by a multiple of the number of locations. However, since this system requires little access to the primary server, the primary server is able to handle multiple locations without difficulty.

The system shown in Figure 2 shows the arrangements where the number of proxies and caches are the same and one proxy and cache are connected in a single hardware unit. However, the second embodiment can utilize an uneven number of proxies and caches, as shown in Figure 1.

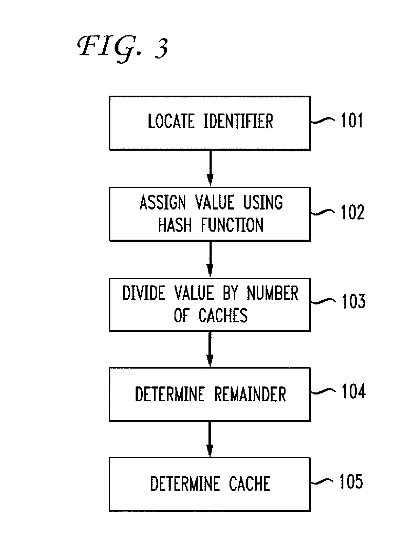

Figure 3 is a flowchart showing the steps of an algorithm utilized to determine the cache in which the document is assigned. Each document is assumed to have a unique identifier, such as a Dewey decimal number. In step 101, the document identifier is determined. In step 102, the identifier is converted to a numerical value using a hash function which converts the identification symbols to numerical values. In step 103, this value is divided by the total number of caches which are operating. In step 104, the remainder after dividing is determined. In step 105, this remainder number is used as the cache number to locate the document.

Numerous modifications and variations of the present invention are possible in light of the above teachings. It is therefore to be understood that within the scope of the appended claims, the invention may be practiced and as specifically described herein.

## Claims

1. A document storage and retrieval system, comprising:
a main storage unit for storing documents;
a primary server connected to the main storage unit;
a plurality of caches which access said main storage unit through the primary server, each of said caches storing an approximately equal share of the documents stored in the main storage unit, with each document being contained in one and only one cache; and
at least one proxy for accessing said caches, each proxy being provided with a means for determining which cache to access for each document.

2. The system according to claim 1, wherein the number of proxies equals the number of caches.

3. The system according to claim 1, wherein the number of proxies does not equal the number of caches.

4. The system according to claim 1, wherein users are connected to said system through a network so as to access said proxies.

5. The system according to claim 1, wherein said proxies determine which cache stores a particular document using an algorithm.

6. The system according to claim 1, wherein said plurality of caches and said at least one proxy are duplicated at more than one location.

7. The system according to claim 1, wherein incoming requests are distributed to the proxies using a load balancing mechanism.

8. The system according to claim 1, wherein one of said caches are selected based on a unique identifier of the requested document using a hash algorithm.

9. The system according to claim 1, wherein the number of caches is variable with documents being reassigned when a cache is removed.

10. The system according to claim 1, wherein initially proxies are configured for more caches than are installed and treated as not available.

11. A method of retrieving documents, comprising:
providing a main storage unit;
providing a primary server;
providing a plurality of caches, each of which stores an approximately equal share of documents stored in said main storage;
said caches accessing said main storage unit through the primary server to retrieve documents assigned thereto;
providing at least one proxy for accessing said caches;
connecting a user to one of said at least one proxy for accessing documents in said caches;
said proxies determining the appropriate cache to access for a requested document;
said appropriate cache providing said document if stored therein and accessing said main storage unit to retrieve said document if it is not stored therein.

12. The method according to claim 11, further comprising adding a cache to expand storage capacity.

13. The method according to claim 11, further comprising removing a cache upon failure.

14. The method according to claim 11, wherein each proxy contains a means for determining the appropriate cache for a document which is adjusted when the number of caches is changed.

15. The method according to claim 11, wherein each proxy determines the appropriate cache by using an algorithm.

16. The method according to claim 11, wherein the step of connecting a user includes a load balancing mechanism for distributing the users roughly evenly between the proxies.

17. The method according to claim 11, wherein the step of determining the appropriate cache is based on the unique identifier of the requested document using a hash algorithm.

18. The method according to claim 11, further comprising reassigning documents stored in a cache which is not functioning to functioning caches using a hash algorithm a second time.

19. The method according to claim 11, wherein said step of providing a plurality of caches includes initially configuring caches that are not actually installed.
